# EUROPÄISCHE PATENTANMELDUNG

(11) **EP 1 691 302 A1**
(43) Veröffentlichungstag der Anmeldung: **16.08.2006**
(21) Anmeldenummer: 05002655.8
(22) Anmeldetag: 09.02.2005
(51) Int. Cl.: G06F 17/30

(54) **Verfahren und Vorrichtung zur Steuerung des Zugriffes auf Datensysteme**

(71) Anmelder: Deutsche Post AG, 53113 Bonn (DE)
(72) Erfinder: Kranz, Jürgen, 50374 Erftstadt (DE); Westerweller, Jörg, 51570 Windeck/Rosbach (DE)
(74) Vertreter: Jostarndt, Hans-Dieter

(57) **Zusammenfassung**

Die Erfindung betrifft ein Verfahren und eine Vorrichtung zur Steuerung des Zugriffes auf wenigstens zwei Datenquellen und/oder Datensenken (30;31) in einem Computersystem (20), wobei das Computersystem aus einem Frontend (40) im Bereich eines Clients und einem Backend (50) im Bereich einer zentralen Serverapplikation besteht und sich die Datenquellen und/oder Datensenken (30;31) im Frontend und/oder im Backend befinden können. Die Datenkomponente (10) befindet sich vorzugsweise im Frontend und weist eine Funktionskomponente (11) und eine Zugriffskomponente (12) auf. Mittels einer Konfigurationsdatei (60) wird die fachliche Logik eines Vorgangsbearbeitungsmoduls (70) in die Funktionskomponente eingelesen, während die technischen Informationen für Aktionen auf den verschiedenen Datensystemen (30;31) in der Zugriffskomponente hinterlegt sind. Diese Trennung von Funktions- und Zugriffskomponente ermöglicht die Veränderung der Eigenschaften der Datensysteme, ohne dass die Funktionskomponente verändert werden muss, da lediglich eine Anpassung der Konfigurationsdatei erforderlich ist.

## Beschreibung

Die Erfindung betrifft eine Vorrichtung zur Steuerung des Zugriffes auf wenigstens zwei Datenquellen und/oder Datensenken in einem Computersystem, wobei das Computersystem aus einem Frontend im Bereich eines Clients und einem Backend im Bereich einer zentralen Serverapplikation besteht und sich die Datenquellen und/oder Datensenken im Frontend und/oder im Backend befinden.

Die Erfindung betrifft ferner ein Verfahren zur Steuerung der Zugriffe auf Datenquellen und/oder Datensenken und ein computerlesbares Medium, das Befehle zum Ausführen des Verfahrens auf einem Computermittel aufweist.

Um Computersysteme bereitzustellen, welche möglichst einfach erweiterbar oder veränderbar sind, ist es bekannt, derartige Systeme stark modular auszubilden. Bei den Modulen handelt es sich um standardisierte Komponenten, welche von mehreren anderen Komponenten verwendet werden können. Vorzugsweise können neue Komponenten nach dem "Plug&Play"-Prinzip angeschlossen werden, ohne dass das gesamte System angepasst werden muss. Dabei ist es bekannt, Computersysteme als so genannte Client-Server-Systeme auszubilden, welche mehrere Clients aufweisen, die eine Benutzeroberfläche und eine Schnittstelle der Anwendung bereitstellen. Eine zugehörige Server-Applikation stellt die Funktionalität zur Verfügung. Üblicherweise kann der Bereich des Clients als Frontend bezeichnet werden, während der Bereich der Serverapplikationen oder weiterer Umsysteme als Backend bezeichnet wird.

Um neue Vorgänge in bestehende Retailsysteme integrieren zu können, so dass diese mit einem Anwendungsprogramm durchführbar sind, müssen neue Komponenten in das bestehende System integriert werden. Bei Retailsystemen im Bereich des Versicherungs-, Finanz- und Logistikwesens müssen beispielsweise neue Vorgänge wie die Eröffnung eines Bankkontos, der Abschluss eines Versicherungsvertrages, der Verkauf eines Tickets oder die Einlieferung eines Versandpaketes abgebildet werden. Dabei ist es vorteilhaft, diese fachlichen Vorgänge durch Vorgangsbearbeitungsmodule abzubilden, welche so stark in einzelne Funktionen herunter gebrochen sind, dass für jeden Einzelvorgang ein eigenes Vorgangsbearbeitungsmodul bereitgestellt wird. So können neue Vorgänge und Transaktionen auf einfache Weise in das bestehende System eingehängt werden, indem Vorgangsbearbeitungsmodule mit einem standardisierten Aufbau erzeugt und implementiert werden. Wird darüber hinaus ein Framework mit einem Hauptprogramm verwendet, das die globale Steuerung übernimmt, umfasst das Anwendungsprogramm auf dem Client kein Hauptprogramm, sondern ruft verschiedene Komponenten des Frameworks auf.

Zur Durchführung einer Transaktion mittels eines derartigen Vorgangsbearbeitungsmoduls ist insbesondere die Bereitstellung und Ablage von Daten erforderlich. Dazu verwendete Datenquellen und Datensenken können sich dabei im Frontend oder im Backend des Computersystems befinden. Bei den Datenquellen und Datensenken handelt es sich beispielsweise um lokale Datenbanken, servergestützte Datenbanken, Anwendungsserver oder Umsysteme. Bei derartigen Computersystemen ist es erstrebenswert, dass diese mit möglichst geringem Aufwand verändert und erweitert werden können. Insbesondere die Verlagerung von Datenbanken beispielsweise vom Frontend in das Backend und umgekehrt soll durchführbar sein, ohne dass die gesamte Funktionslogik des Systems angepasst werden muss.

Aufgabe der Erfindung ist es daher, eine Vorrichtung zur Steuerung des Zugriffes auf wenigstens zwei Datenquellen und/oder Datensenken in einem Computersystem bereitzustellen, das eine einfache Veränderung der Eigenschaften von Datenquellen/Datensenken innerhalb des Systems ermöglicht, wobei insbesondere eine Veränderung von Online- und Offline-Zugriffen ermöglicht werden soll. Ferner soll sich die Vorrichtung zur modularen Erweiterung des Computersystems mit Vorgangsbearbeitungsmodulen eignen, welche einen einzelnen Vorgang eines Retailsystems abbilden.

Aufgabe der Erfindung ist es ferner, ein Verfahren zur Steuerung des Zugriffes auf wenigstens zwei Datenquellen und/oder Datensenken bereitzustellen.

Erfindungsgemäß wird diese Aufgabe durch eine Vorrichtung mit den Merkmalen des unabhängigen Anspruches 1 gelöst. Vorteilhafte Weiterbildungen der Vorrichtung ergeben sich aus den Unteransprüchen 2-3. Die Aufgabe wird ferner durch ein Verfahren nach Anspruch 4 gelöst. Vorteilhafte Ausführungsformen des Verfahrens ergeben sich aus den Unteransprüchen 5-8. Anspruch 9 gibt ein computerlesbares Medium zur Durchführung des Verfahrens an.

Die erfindungsgemäße Vorrichtung zur Steuerung des Zugriffes auf wenigstens zwei Datenquellen und/oder Datensenken in einem Computersystem sieht vor, dass das Computersystem aus einem Frontend im Bereich eines Clients und einem Backend im Bereich einer zentralen Serverapplikation besteht. Die Datenquellen und/oder Datensenken befinden sich dabei im Frontend und/oder im Backend. Bei der Vorrichtung handelt es sich um eine Datenkomponente, welche wenigstens eine Funktionskomponente umfasst, in welche eine Konfigurationsdatei einlesbar ist, wobei die Konfigurationsdatei fachliche Informationen für die Zugriffe auf die Datenquellen und/oder Datensenken enthält. Die Datenkomponente umfasst ferner eine Zugriffskomponente, wobei die Zugriffskomponente technische Informationen zu Aktionen auf den Datenquellen und/oder Datensenken enthält.

Die Konfigurationsdatei enthält Informationen zu den Datenquellen und/Datensenken, welche von einem oder mehreren der Vorgangsbearbeitungsmodule des Computersystems zur Datenablage oder zur Datenabfrage benötigt werden, während in der Zugriffskomponente die Logik für die Erzeugung und Parametrisierung von technischen Zugriffen auf die Datenquellen und/oder Datensenken hinterlegt ist.

Die Erfindung umfasst ferner ein Verfahren zur Steuerung des Zugriffes auf wenigstens zwei Datenquellen und/oder Datensenken. In einem besonders bevorzugten Ausführungsbeispiel der Erfindung erfolgt die Validierung von Eingabe- und Ausgabeparametern durch die Funktionskomponente. Bei einer Veränderung der fachlichen Logik eines Datenzugriffes wird die Konfigurationsdatei verändert.

Die Erfindung umfasst ferner ein computerlesbares Medium, das Befehle zum Ausführen der Schritte des erfindungsgemäßen Verfahrens auf einem Computermittel aufweist.

Die erfindungsgemäße Vorrichtung und das zugehörige Verfahren haben den Vorteil, dass es durch die Trennung der Funktionskomponente von der Zugriffskomponente möglich wird, die Eigenschaften der verschiedenen Datenquellen und Datensenken zu ändern, ohne dass die Funktionskomponente verändert werden müssen. Beispielsweise kann eine Datenquelle vom Frontend in das Backend verlagert werden, ohne dass die Funktionskomponente verändert werden muss. So kann ferner ein Online-Zugriff in einen Offline-Zugriff geändert werden, wobei lediglich eine Änderung der Konfigurationsdatei des betreffenden Zugriffes angepasst werden muss. Da die Konfigurationsdatei von mehreren Vorgangsbearbeitungsmodulen genutzt wird, welche den betreffenden Datenzugriff verwenden, steht allen Vorgangsbearbeitungsmodulen der neue Datenzugriff zur Verfügung, ohne dass weitere Anpassungen erforderlich sind. Bei der Erzeugung von Vorgangsbearbeitungsmodulen hat dies wiederum den Vorteil, dass der Entwickler des Moduls keine Kenntnis über den genauen technischen Ablauf beim Datenzugriff haben muss, da er diesen lediglich einsetzt.

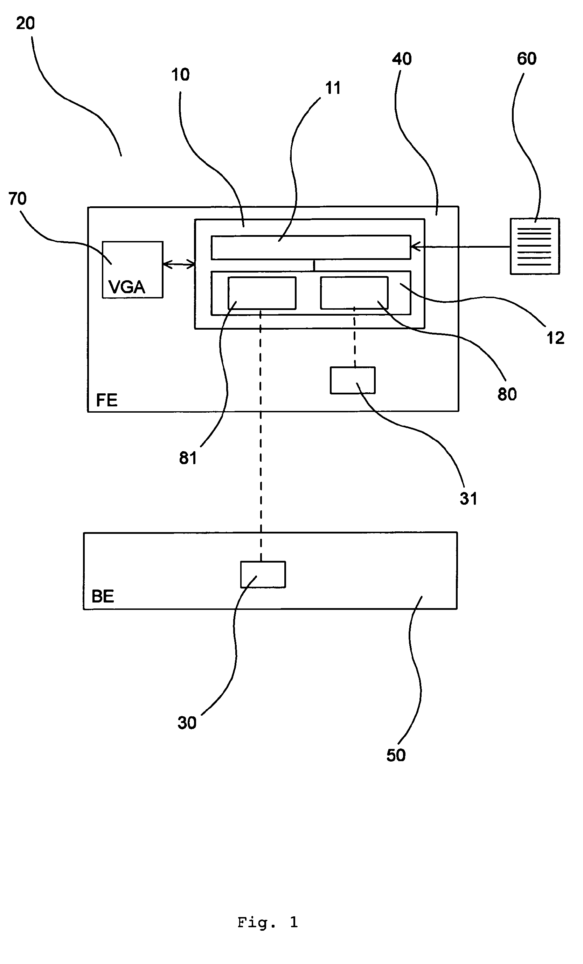

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildung Fig. 1. Die Fig. 1 zeigt eine schematische Darstellung des Aufbaus der erfindungsgemäßen Datenkomponente innerhalb eines Computersystems.

In der Fig. 1 ist eine Datenkomponente 10 dargestellt, welche in Verbindung mit wenigstens einem Vorgangsbearbeitungsmodul 70 steht, das im Folgenden auch mit VGA bezeichnet wird. Dabei können zwischen die Datenkomponente und das Vorgangsbearbeitungsmodul weitere Komponenten oder Funktionseinheiten insbesondere des verwendeten Frameworks geschaltet sein, so dass es sich auch um eine indirekte Verbindung handeln kann. Die Datenkomponente ist vorzugsweise im Frontend 40 des Computersystems angeordnet, sie kann jedoch je nach Ausbildung des Systems auch dem Backend 50 zugeordnet werden.

Bei einem Frontend kann es sich beispielsweise um einen Computerarbeitsplatz in einer Filiale, einen Automaten, ein Mobiltelefon oder eine Website auf einem Computer eines Nutzers handeln. Das Frontend ist dadurch definiert, dass an ihm von einem Nutzer Transaktionen oder Vorgänge initiiert und durchgeführt werden können, welche durch einzelne Vorgangsbearbeitungsmodule abgebildet werden. Das Frontend steht somit in direkter Verbindung zu einem Nutzer, während sich das Backend im Hintergrund eines Gesamtsystems befindet und ein Nutzer dadurch keinen direkten Zugriff auf das Backend hat. Ein Nutzer kann nur über das Frontend mit Komponenten des Backends kommunizieren oder auf diese zugreifen. Das Backend stellt zentral Funktionalitäten bereit, auf welche mehrere Clients im Frontend zugreifen können. Bei den Funktionalitäten kann es sich beispielsweise um eine Datenbereitstellung, -überprüfung und -sicherung oder die Verteilung von Daten an Umsysteme handeln. Üblicherweise ist das Frontend räumlich vom Backend getrennt.

Ein Vorgangsbearbeitungsmodul 70 bildet elektronisch einen Vorgang oder Geschäftsprozess ab, welcher von dem Vorgangsbearbeitungsmodul abgewickelt wird. Bei den Vorgängen handelt es sich beispielsweise um Transaktionen innerhalb eines Retailsystems, welche im Bereich des Finanz-, Versicherungs-, und Logistikwesens eingesetzt werden. Ein Vorgangsbearbeitungsmodul dient dabei insbesondere zur Sammlung aller erforderlichen Daten für einen Vorgang. Das Vorgangsbearbeitungsmodul ist auf einem Computermittel installiert, das in Verbindung mit einer Benutzeroberfläche steht. Die Transaktionen können beispielsweise an einem Computerarbeitsplatz in einer Filiale eines Dienstleisters oder an einem Automaten durchgeführt werden. Automaten können für den Verkauf von Fahrkarten, Briefmarken oder sonstigen Dienstleistungen eingesetzt werden, während der Kunde an einem Computerarbeitsplatz einer Filiale selbst oder im Zusammenspiel mit einem Filialbediensteten eine Transaktion durchführen kann. Transaktionen können ferner über Mobiltelefone oder Websites durchgeführt werden, welche ein Kunde auf einem Computer mit Internetzugang aufrufen kann.

Das Vorgangsbearbeitungsmodul ist auf einem Computermittel installiert, das vorzugsweise mehrere Vorgangsbearbeitungsmodule aufweist, welche jeweils einen Vorgang abbilden. Die Vorgangsbearbeitungsmodule können sich dabei ebenfalls im Frontend 40 oder im Backend 50 des Computersystems aus mehreren Komponenten befinden. Vorzugsweise sind die VGAs wie die Datenkomponente 10 im Frontend 40 angeordnet.

In einem besonders bevorzugten Ausführungsbeispiel der Erfindung handelt es sich bei dem Gesamtsystem, in welches die Vorgangsbearbeitungsmodule integriert sind, um ein stark modulares System, in welchem die Vorgänge bis auf kleinste Funktionseinheiten herunter gebrochen sind. Daher kann ein Vorgangsbearbeitungsmodul insbesondere einen Prozess abbilden, welcher Bestandteil mehrerer anderer Vorgangsbearbeitungsmodule ist. Beispielsweise kann ein VGA das Einscannen eines Barcodes, die Erfassung von Ausweisdaten oder die Berechnung eines Wertes abbilden. Diese Einzelprozesse können als Module von anderen Vorgangsbearbeitungsmodulen aufgerufen werden, so dass sie nur einmalig implementiert werden müssen.

Die Vorgangsbearbeitungsmodule 70 befinden sich zusammen mit der Datenkomponente 10 auf einem Client. Der Client kann dabei eine Plattform mit weiteren Komponenten eines Frameworks wie Bibliotheken, Datenbanken, Abrechnungsmodule, etc. nutzen. In einem besonders bevorzugten Ausführungsbeispiel der Erfindung kann eine als CARBON(Component **AR**chitecture for **B**usiness **O**ptimizatio**N**)-Plattform bezeichnete Plattform genutzt werden, welche als Software realisiert und auf Datenverarbeitungsanlagen installiert ist. Das Framework beinhaltet dabei die Laufzeitbibliothek der Plattform, welche auch als Common Language Runtime bezeichnet wird (CLR). Bei dem Framework handelt es sich um ein API (Application Programming Interface), welches die Funktionalitäten bereitstellt, Clients für verschiedene Assistent-basierte Vorgangsbearbeitungsmodule zu erstellen. Die von dem Framework zur Verfügung gestellten Funktionalitäten umfassen beispielsweise Kernfunktionalitäten wie das Starten/Beenden des Clients oder der Vorgangsbearbeitungsmodule. Das Framework stellt beispielsweise ein gemeinsames Startmodul zum Starten der Vorgangsbearbeitungsmodule bereit. Ferner unterstützt das Framework die Vorgangsbearbeitungsmodule bei der Ablaufsteuerung und stellt Komponenten zum Drucken bereit. Darüber hinaus werden Basisfunktionalitäten wie die Protokollierung oder die Fehlerbehandlung bereitgestellt.

Als vollständig objektorientierte Programmiersprache innerhalb des Frameworks kann beispielsweise C# verwendet werden. Die objektorientierte Programmierung sieht Objekt-Klasse-Beziehungen vor, wobei eine Klasse ein abstrakter Oberbegriff für Objekte ist, die eine gemeinsame Struktur und/oder ein gemeinsames Verhalten aufweisen. Ein Objekt ist dabei ein zur Laufzeit eines Programms vorhandenes Exemplar einer Klasse, für das Speicherplatz zur Verfügung gestellt wird. Ein Objekt ist eine Instanz einer Klasse. Eine Klasse und damit ihre Objekte werden durch Attribute, Operationen, Zusicherungen und Beziehungen charakterisiert, wobei die Klassen die Attribute und Methoden zu einer Einheit zusammenfassen. Die Attribute sind standardmäßig nur über Methoden der Klasse zugänglich, so dass eine Kapselung oder Zugriffsbeschränkung vorliegt. Eine Klasse kann ferner keine, eine oder mehrere explizite Schnittstellen besitzen und die Kapselung trennt die Implementierung von der Schnittstelle.

Das Computersystem 20 umfasst wenigstens zwei Datenquellen bzw. Datensenken 30 und 31. Bei einer Datenquelle handelt es sich um einen Ursprungsort, von welchem Daten geliefert werden. Bei einer Datensenke handelt es sich um einen Bestimmungsort für Daten und somit um eine Empfangsstelle. Die Übernahme von Daten erfolgt üblicherweise über eine standardisierte Schnittstelle. Bei den Datenquellen und Datensenken kann es sich beispielsweise um lokale Datenbanken, servergestützte Datenbanken, Anwendungsserver oder Umsysteme handeln. Derartige Datenquellen und Datensenken werden zur Vereinfachung im Folgenden auch allgemein als Datensysteme bezeichnet. Die Datensysteme können sowohl im Frontend 40 als auch im Backend 50 angeordnet sein. In dem in Fig. 1 dargestellten Ausführungsbeispiel ist ein erstes Datensystem 30 dem Backend BE zuzuordnen, während ein zweites Datensystem 31 dem Frontend FE zuzuordnen ist.

Die erfindungsgemäße Datenkomponente 10 umfasst wenigstens eine Funktionskomponente 11 und eine Zugriffskomponente 12.

Erfindungsgemäß ist eine Konfigurationsdatei 60 in die Funktionskomponente 11 einlesbar, wobei die Konfigurationsdatei 60 fachliche Informationen für die Zugriffe auf die Datensysteme enthält. Für jeden Zugriff auf ein Datensystem wird somit eine Konfigurationsdatei bereitgestellt. Die Konfigurationsdatei liegt vorzugsweise im XML-Format (Extensible Markup Language) vor und initiiert eine Klasse *DataService* zur Kapselung aller Datenzugriffe. Die Konfiguration erfolgt vorzugsweise mittels schemabasierendem XML und die Initialisierung erfolgt durch die erzeugenden Klassen. Die Konfigurationsdaten werden als XML-Element-Objekte mit einem Konstruktor in die tieferen Schichten weitergegeben. Quelle für eine Konfigurations-XML können beispielsweise eine Anwendungskonfigurationsdatei, eine Konfigurationsdatei eines Vorgangsbearbeitungsmoduls oder eine Konfigurationsdatenbank sein. In einem besonders bevorzugten Ausführungsbeispiel der Erfindung hält die Zugriffskomponente den Konfigurations-XML-Verknüpfungspunkt für die Erzeugung der Datenaktionen vor.

Die Funktionskomponente bildet die fachlichen Inhalte der Vorgangsbearbeitungsmodule 70 ab, wobei beispielsweise in der Konfigurationsdatei 60 hinterlegt ist, in welcher Datenquelle von Vorgangsbearbeitungsmodulen benötigte Daten gespeichert sind oder in welcher Datensenke durch Vorgangsbearbeitungsmodule erfasste Daten hinterlegt werden. Ferner erfolgt die Validierung von Eingabe- und Ausgabewerten durch die Funktionskomponente. Auch die Zusammenführung von Daten aus mehreren Datensystemen wird durch die Funktionskomponente durchgeführt. Technische Details für den Zugriff auf die Datensysteme sind in der Funktionskomponente jedoch erfindungsgemäß nicht enthalten.

Die Funktionskomponente enthält alle fachliche Logik für den Zugriff auf die Datenquellen und -senken. Besteht die Anforderung einer eindeutigen Identifizierung eines Vorganges, so kann dies durch Hinzufügen einer ID mittels Meta-Daten angebildet werden. Die Aufgabe der Funktionskomponente besteht im Wesentlichen in der Kapselung des logischen Zugriffes in einem fachlichen, typisierten Interface. Sie dient ferner als Schnittstelle für die fachliche Parametrisierung des Zugriffes zum Beispiel durch die Übergabe des Prozesskontextes. Die Parametrisierung erfolgt vorzugsweise auf drei Wegen. Zum einen werden in der Konfiguration die technischen Informationen zum Datenzugriff hinterlegt. Zum anderen werden im Konstruktor Parameter übergeben und mit dem Aufruf der fachlichen Methode zugriffsspezifische Parameter übergeben wie z.B. der Name eines Kunden. Darüber hinaus befüllt die Funktionskomponente ein Anfrage-Dataset, interpretiert ein Antwort-Dataset und verwaltet Transaktionskennzeichen wie Rohdatenschlüssel.

Die Zugriffskomponente 12 der Datenkomponente enthält die technischen Informationen zu Aktionen auf den Datensystemen und stellt eine technische Verwaltungsschicht dar. Sie enthält die Logik zur Erzeugung und Parametrisierung von technischen Zugriffen auf die Datensysteme, jedoch keine fachliche Logik. Der Zugriff auf die Datensysteme erfolgt über Schnittstellen in Form von so genannten Datenaktionen.

Die Zugriffskomponente 12 wird vorzugsweise als abstrakte Klasse *DataService* ausgeführt. Sie fungiert als Factory für alle Datenaktionen. Eine Datenaktion wird durch eine Klasse implementiert, die eine Schnittstelle in Form eines *IDataAction-Interface* implementiert. Jede als Datenaktion fungierende Klasse muss diese Schnittstelle implementieren.

Über dieses *IDataAction-Interface* werden alle lokalen und servergestützten Datenzugriffe durchgeführt. Das IDataAction-Interface realisiert vorzugsweise alle allgemeinen Datenoperationen wie Lesen, Schreiben und Manipulieren. Die verschiedenen Klassen zur Unterstützung verschiedener Datenaktionen, welche das IDataAction-Interface implementieren, können in servergestützte Dienste und Datenbankadapter unterteilt werden. Vorzugsweise sind daher jeweils *ServerActions* 80 für Serverzugriffe und *DBActions* 81 vorgesehen. Die Zugriffskomponente ermöglicht durch diese verschiedenen Datenaktionen die Unterscheidung zwischen Online- und Offline-Datenbankzugriffen.

Ferner kann wenigstens eine Nachrichtenkomponente 90 eingesetzt werden, welche die Kommunikation zwischen Frontend und Backend ermöglicht. Dazu ist sowohl das Frontend als auch das Backend mit einer geeigneten Schnittstelle ausgebildet. Die Datenübertragung innerhalb der Nachrichtenkomponente 90 basiert vorzugsweise auf XML oder SOAP (Simple Object Access Protocol). In einem besonders bevorzugten Ausführungsbeispiel der Erfindung kann die Verknüpfung der Computermittel des Front- und Backends über Nachrichtenwege mit unterschiedlich schnellen Verbindungen hergestellt werden. Für einen Nachrichtenweg kann beispielsweise eine Middleware eingesetzt werden.

Die Datenaktionen unterstützen servergestützte Dienste, so dass vorzugsweise eine Klasse ServerOnlineAction und eine Klasse ServerOfflineAction abgeleitet werden. Die Klasse *ServerOnlineAction* dient zur synchronen Kommunikation zwischen einem Client und dem Server. Hierzu werden die übergebenen Daten beispielsweise von einer Middleware in Nachrichten verpackt und versendet. Diese Klasse kann daher bei der Nutzung serverseitiger Dienste (z.B. Kundensuche), bei der Übermittlung von SOAP-Aufrufen oder der Übermittlung von Nachrichten an vorhandene Applikationsserver angewendet werden. Die *ServerOnlineAction* erzeugt einen *ServerAdapter* und einen *TemplateProzessor*. Mit Aufruf der Zugriffsmethoden wird ein Templatestring mit Kommunikationsparametern expandiert und an die konkreten Adapter weitergeleitet. Zu den Kommunikationsparametern können beispielsweise eine ApplicationID, ClientID, VorgangsID oder VersionisierungsID gehören. Zusätzlich zu der Nachricht oder dem Persistenz-Objekt wird eine Priority-Nachricht erzeugt, welche die Replikation auslöst.

Bei asynchron durchgeführten Online-Zugriffen spielen Timeouts eine entscheidende Rolle. Analog zur Struktur der Datenkomponente kann es sich um fachliche Timeouts und technische Timeouts handeln. Der technische Timeout ist vorzugsweise Teil der technischen Implementationsschicht in Form der Zugriffskomponente und wird in Zugriffsadaptern gekapselt. Bei Eintritt eines Timeout wird das Ereignis Timeout ausgeworfen und durch die fachliche Logik weiterverarbeitet. Fachliche Timeouts stellen logische Ereignisse dar, deren Definition in Fachkonzepten der Funktionskomponente ausgearbeitet werden. Beispielsweise kann definiert werden, wann der Timeout gestartet wird, ob der Timeout für eine oder mehrere Datenaktionen gilt und wie die Anwendung auf den Timeout reagieren soll.

Analog zur Klasse *ServerOnlineAction* wird die Klasse *ServerOfflineAction* abgeleitet, wobei jedoch die abschließende Priority-Nachricht zur Auslösung einer sofortigen Replikation entfällt. Bevorzugte Anwendungsgebiete für diese Klasse sind serverseitige Dienste wie das Schreiben eines Vertrages oder die Übermittlung von Nachrichten an vorhandene Applikationsserver, die keine Antwort generieren.

Wird zur Kommunikation mit dem Backend 50 eine Benachrichtigungskomponente 90 eingesetzt, realisiert eine zugehörige Klasse eine *IDataAction*-Fassade für die Schnittstelle der Benachrichtigungskomponente. Eine Transportschicht entscheidet, welche Middleware bzw. welches Protokoll für die Kommunikation mit dem Backend verwendet werden soll. Die Konfiguration dieser Klasse enthält somit nur die Informationen, welche für die Aufbereitung der fachlichen Daten erforderlich ist.

Die Schnittstelle IDataAction-Interface und damit die Zugriffskomponente 12 ermöglicht die Entkopplung der Funktionskomponente 11 von dem Ort der Datenquelle, so dass sich Datensysteme auf einem Client, einem Server oder in einem Umsystem und somit im Frontend 40 oder im Backend 50 befinden können. Dies hat den Vorteil, dass der Ort der Datenbank verändert werden kann, ohne dass die Funktionskomponente modifiziert werden muss. Datensysteme können daher lokal im Frontend verschoben oder zwischen Frontend und Backend bewegt werden, was zu einer hohen Flexibilität des Systems führt.

In einem weiteren Ausführungsbeispiel der Erfindung wird die Datenkomponente durch eine Adapterkomponente ergänzt, welche als Schnittstelle in der Lage ist, eine Verbindung zwischen der Zugriffskomponente und mehreren unterschiedlichen Datensystemen herzustellen. Die Adapterkomponente weist Adapter für den Aufsatz auf mehrere unterschiedliche Datensysteme auf. Die Adapterkomponente kapselt die Zugriffe auf die nativen Schnittstellen der unterstützten Datensysteme. Die Adapterkomponente setzt dabei vorzugsweise direkt auf die Datensysteme oder eine verwendete Middleware auf. Bei einer Middleware handelt es sich um eine anwendungsunabhängige Komponente, welche Dienstleistungen zur Vermittlung zwischen Anwendungen anbietet. Eine Middleware stellt eine Ebene in einem komplexen Software-System dar, die als Dienstleister anderen ansonsten entkoppelten Softwarekomponenten die Kommunikation untereinander ermöglicht.

Die Adapterkomponente umfasst vorzugsweise mehrere Adapter, welche für den Zugriff auf verschiedene Datensysteme ausgebildet sind. Beispielsweise können entsprechende Adapter für den Zugriff auf verschiedene Datenbanken vorgesehen sein. Durch ein verwendetes Framework können als Adapter für den Datenbankzugriff beispielsweise OLEDB (Open DataBase Connectivity)-, SQL (Standard Query Language)- und EDBC (Enhanced DataBase Container)-Adapter zur Verfügung stehen. Das feldweise Mapping ist für alle Zugriffe, die einen abgeleiteten Adapter verwenden, konfigurierbar.

Für jeden Adapter wird in der Zugriffskomponente eine entsprechende Datenaktion bereitgestellt. Für den SQL-Adapter wird beispielsweise eine Datenaktion in Form einer Klasse *Sq1IDataAction* bereitgestellt, die von der Klasse DBDataAction abgeleitet ist. Mit einem Konstruktor werden die notwendigen Daten für die Datenbankverbindung übergeben. Handelt es sich bei dem Framework, in welches die Datenkomponente integriert ist, um ein .NET-basiertes System, kann der Zugriff auf die Datenbank mit den .NET-Klassen *SQLDataAdapter* und *SQLConnection* erfolgen. Für weitere Datenbankadapter können entsprechende Datenaktionen *OleDbDataAction* oder *ODBCDataAction* abgeleitet werden.

Ferner kann wenigstens eine Nachrichtenkomponente eingesetzt werden, welche die Kommunikation zwischen Frontend und Backend ermöglicht. Dazu ist sowohl das Frontend als auch das Backend mit einer geeigneten Schnittstelle ausgebildet. Die Datenübertragung innerhalb der Nachrichtenkomponente basiert vorzugsweise auf XML oder SOAP (Simple Object Access Protocol). In einem besonders bevorzugten Ausführungsbeispiel der Erfindung kann die Verknüpfung der Computermittel des Front- und Backends über Nachrichtenwege mit unterschiedlich schnellen Verbindungen hergestellt werden. Für einen Nachrichtenweg kann beispielsweise eine Middleware eingesetzt werden.

In einem besonders bevorzugten Ausführungsbeispiel der Erfindung wird im Zusammenhang mit der Benachrichtigungskomponente ein Verfahren zur Datenübertragung eingesetzt, das ein zugewiesener Übertragungskanal so beschaffen ist, dass er eine Mitübermittlung von weiteren Daten als den ursprünglich zugewiesenen Daten ermöglicht. Dies hat den Vorteil, dass ein Mitnehmen von Daten erfolgt, die eigentlich nicht für eine Übertragung vorgesehen sind, wobei das Mitnehmen jedoch den für die Übertragung der anderen Daten bereits geöffneten Übertragungskanal mitnutzt, soweit der Übertragungskanal und/oder seine Übertragungsparameter (Übertragungskapazität, Datenvolumen) ein derartiges Mitübertragen zulässt.

Hierbei ist es besonders vorteilhaft, dass bei einer Übertragung von Daten mit einer hohen Priorität für die Datenübertragung überprüft wird, ob Daten vorhanden sind, die eine niedrigere Priorität aufweisen, gleichfalls über den für die Übertragung der Daten hoher Priorität zugewiesenen Übertragungskanal übertragen werden können.

Die Datenkomponente 10 stellt vorzugsweise eine Komponente eines Frameworks dar, welche von anderen Komponenten genutzt werden kann. Beispielsweise kann die Datenkomponente von einer Rohdatenkomponente genutzt werden, welche die erste Erfassung von Datenmaterial in Form einer Rohdatenliste (raw data) verarbeitet. In einem besonders bevorzugten Ausführungsbeispiel der Erfindung werden bei der Bereitstellung und Ablage von Daten definierte Transaktionspläne durchlaufen, welche die Abarbeitung mehrerer Datensenken und -quellen regeln. Die Transaktionspläne sehen insbesondere vor, dass ein Vorgang nur als abgeschlossen gemeldet wird, wenn alle Einzelvorgänge in den verschiedenen Datensystemen erfolgreich waren. Eine Vorgangsbestätigung wird somit nur gegeben, wenn die Aktion vollständig gelungen ist. Die Transaktionspläne sind vorzugsweise an die Struktur der Datenkomponente angepasst, wodurch eine möglichst schnelle Abarbeitung von Datenzugriffen erreicht wird.

### Bezugszeichenliste:

- 10: Datenkomponente
- 11: Funktionskomponente
- 12: Zugriffskomponente
- 20: Computersystem
- 30,31: Datenquelle, Datensenke, Datensystem
- 40: Frontend, FE
- 50: Backend, BE
- 60: Konfigurationsdatei
- 70: Vorgangsbearbeitungsmodul, VGA
- 80: Server-Datenaktion
- 81: Datenbank-Datenaktion
- 90: Nachrichtenkomponente, Middleware

## Patentansprüche

1. Vorrichtung zur Steuerung des Zugriffes auf wenigstens zwei Datenquellen und/oder Datensenken (30;31) in einem Computersystem (20), wobei das Computersystem aus einem Frontend (40) im Bereich eines Clients und einem Backend (50) im Bereich einer zentralen Serverapplikation besteht und sich die Datenquellen und/oder Datensenken (30;31) im Frontend (40) und/oder im Backend (50) befinden,
**dadurch gekennzeichnet,**
**dass** die Vorrichtung eine Datenkomponente (10) ist, welche wenigstens die folgenden voneinander getrennten Einzelkomponenten umfasst:
- Funktionskomponente (11), in welche eine Konfigurationsdatei (60) einlesbar ist, wobei die Konfigurationsdatei (60) fachliche Informationen für die Zugriffe auf die Datenquellen und/oder Datensenken (30;31) enthält;
- Zugriffskomponente (12), wobei die Zugriffskomponente (12) technische Informationen zu Aktionen auf den Datenquellen und/oder Datensenken (30; 31) enthält.

2. Vorrichtung nach Anspruch 1,
**dadurch gekennzeichnet,**
**dass** die Datenkomponente (10) im Bereich des Frontends (40) angeordnet ist.

3. Vorrichtung nach einem oder beiden der Ansprüche 1 und 2,
**dadurch gekennzeichnet,**
**dass** die Konfigurationsdatei (60) Informationen zu den Datenquellen und/Datensenken (30;31) enthält, welche von einem oder mehreren der Vorgangsbearbeitungsmodule (70) des Computersystems (20) zur Datenablage oder zur Datenabfrage benötigt werden, während in der Zugriffskomponente (12) die Logik für die Erzeugung und Parametrisierung von technischen Zugriffen auf die Datenquellen und/oder Datensenken hinterlegt ist.

4. Verfahren zur Steuerung des Zugriffes auf wenigstens zwei Datenquellen und/oder Datensenken (30;31) in einem Computersystem (20), wobei das Computersystem aus einem Frontend (40) im Bereich eines Clients und einem Backend (50) im Bereich einer zentralen Serverapplikation besteht und sich die Datenquellen und/oder Datensenken (30;31) im Frontend (40) und/oder im Backend (50) befinden,
**dadurch gekennzeichnet,**
**dass** eine Datenkomponente (10) mit wenigstens zwei voneinander getrennten Einzelkomponenten in Form einer Funktionskomponente (40) und einer Zugriffskomponente (11) bereitgestellt wird und dass eine Konfigurationsdatei (60) in die Funktionskomponente (40) eingelesen wird, wobei die Konfigurationsdatei (60) fachliche Informationen für die Zugriffe auf die Datenquellen und/oder Datensenken (30;31) enthält, während technische Informationen zu Aktionen auf die Datenquellen und/oder Datensenken (30;31) in der Zugriffskomponente (12) hinterlegt werden.

5. Verfahren nach Anspruch 4,
**dadurch gekennzeichnet,**
**dass** die Datenkomponente (10) im Bereich des Frontends (40) angeordnet wird.

6. Verfahren nach einem oder beiden der Ansprüche 4 und 5,
**dadurch gekennzeichnet,**
**dass** in der Konfigurationsdatei (60) Informationen zu den Datenquellen und/Datensenken (30;31) hinterlegt werden, welche von einem Vorgangsbearbeitungsmodul (70) des Computersystems (20) zur Datenablage oder zur Datenabfrage benötigt werden, während in der Zugriffskomponente (12) die Logik für die Erzeugung und Parametrisierung von technischen Zugriffen auf die Datenquellen und/oder Datensenken hinterlegt wird.

7. Verfahren nach einem oder mehreren der Ansprüche 4 bis 6,
**dadurch gekennzeichnet,**
**dass** die Validierung von Eingabe- und Ausgabeparametern durch die Funktionskomponente (11) erfolgt.

8. Verfahren nach einem oder mehreren der Ansprüche 4 bis 7,
**dadurch gekennzeichnet,**
**dass** bei einer Veränderung der fachlichen Logik eines Vorgangsbearbeitungsmoduls (70) die Konfigurationsdatei (60) verändert wird.

9. Computerlesbares Medium, das Befehle zum Ausführen der Schritte des Verfahrens 4 auf einem Computermittel aufweist.
